(19) Europäisches Patentamt
European Patent Office
Office européen des brevets

(11) Veröffentlichungsnummer: **0 596 300 A1**

# (12) EUROPÄISCHE PATENTANMELDUNG

(21) Anmeldenummer: **93116694.6**

(22) Anmeldetag: **15.10.93**

(51) Int. Cl.[5]: **C08K 5/06**, C08L 57/10, C08L 41/00, C09J 133/06, C09J 4/00

(30) Priorität: **06.11.92 DE 4237438**

(43) Veröffentlichungstag der Anmeldung: **11.05.94 Patentblatt 94/19**

(84) Benannte Vertragsstaaten: **BE DE ES FR GB IT NL**

(71) Anmelder: **BASF Aktiengesellschaft**
**Carl-Bosch-Strasse 38**
**D-67063 Ludwigshafen(DE)**

(72) Erfinder: **Kroener, Hubertus, dr.**
**Londoner Ring 6**
**D-6700 Ludwigshafen(DE)**
Erfinder: **Dittrich, Uwe, Dr.**
**Pfalzgrafenstrasse 21**
**D-6700 Ludwigshafen(DE)**
Erfinder: **Zettl, Alexander**
**Homburger Strasse 5**
**D-6700 Ludwigshafen(DE)**

(54) **Mit Divinylether vernetzende wässrige Dispersion oder Lösung.**

(57) Wäßrige Dispersion oder Lösung eines radikalischen Polymerisats, welches zu 0,01 bis 10 Gew.-% aus Carbonsäuregruppen $-CO_2H$ oder Sulfonsäuregruppen $-SO_3H$ besteht, enthaltend als Vernetzungsmittel eine Verbindung mit mindestens zwei Vinylethergruppen

EP 0 596 300 A1

Die Erfindung betrifft eine wäßrige Dispersion oder Lösung eines radikalischen Polymerisats, welches zu 0,01 bis 10 Gew.-% aus Carbonsäuregruppen $-CO_2H$ oder Sulfonsäuregruppen $-SO_3H$ besteht, enthaltend als Vernetzungsmittel eine Verbindung mit mindestens zwei Vinylethergruppen

Bei Copolymerisaten, welche als Klebstoffe Verwendung finden, handelt es sich vielfach um vernetzungsfähige Copolymerisate. Durch die Vernetzung nimmt die Kohäsion, d.h. die innere Festigkeit der Klebstoffe zu, während jedoch die Adhäsion zu den zu verklebenden Substratoberflächen im allgemeinen abnimmt.

Zur Vernetzung wird den Copolymerisaten im allgemeinen ein Vernetzungsmittel zugesetzt, das mit funktionellen Gruppen im Copolymerisat reagiert.

Mögliche Vernetzungsmittel sind z.B. Polyisocyanate, welche mit Hydroxyl- oder Aminogruppen reagieren.

Aus der DE-A-35 21 618 sind entsprechende wäßrige Klebstoffzubereitungen bekannt, bei denen in Wasser dispergierte Polyisocyanate wäßrigen Dispersionen radikalische polymerisierter Copolymerisate als Vernetzungsmittel zugesetzt werden. Ähnliche Klebstoffzubereitungen sind auch in der US-A 4 396 738 und DE-A-31 12 117 beschrieben.

Nachteilig bei diesen wäßrigen Zubereitungen ist jedoch die mangelnde Lagerstabilität. Das Polyisocyanat darf daher erst kurz vor seiner Verwendung als Vernetzungshilfsmittel in Wasser dispergiert und mit dem Copolymerisat gemischt werden.

Eine erhöhte Lagerstabilität kann durch Umsetzung der Isocyanatgruppen mit Blockierungsmitteln, z.B. Oximen, Caprolactam, Phenolen, Maleinsäuredialkylestern erreicht werden.

Die erhaltenen sog. blockierten Polyisocyanate hydrolysieren in wäßriger Dispersion nur noch in untergeordnetem Ausmaß.

Gegenstand der DE-A-38 07 555 ist ein solches, mit Oximen blockiertes Diisocyanat, welches in Wasser dispergiert wird und sich als Zusatz für in Wasser dispergierte Polymerisate eignet.

Vernetzungsreaktionen treten jedoch erst nach Abspaltung des Blockierungsmittels bei Temperaturen ab ca. 130 °C auf.

Bisher bekannte wäßrige Klebstoffzubereitungen mit Polyisocyanaten als Vernetzungshilfsmittel sind daher entweder nicht lagerstabil und können daher nur als 2-Komponentensystem Verwendung finden oder vernetzen erst bei hohen Temperaturen.

Lagerstabile, bei Raumtemperatur nach Entfernen des Lösungsmittels vernetzende wäßrige Dispersionen sind aus der EP-A-3516 bekannt. Diese Dispersionen enthalten Polyhydrazide, welche mit im Copolymerisat einpolymerisierten Monomeren mit Carbonylgruppen reagieren.

Grundsätzlich besteht ein Bedarf an weiteren, bei Raumtemperatur vernetzenden Dispersionen, um Alternativen zur Polyhydrazidvernetzung zu Verfügung stellen zu können. Des weiteren sollen diese Dispersionen gute anwendungstechnische Eigenschaften, z.B. bei der Verwendung als Klebstoff eine gute Haftung (Adhäsion), insbesondere eine gute Naßhaftung auf unterschiedlichsten Substraten, und eine gute Kohäsion aufweisen.

Divinylether als Vernetzungsmittel sind aus der SU-A-1 235 879 und der FR-A-2 558 845 bekannt. Nach der SU-A-1 235 879 werden Divinylether zu flüssigem, carboxyliertem Kautschuk zugesetzt und die Mischung bei 80 °C vulkanisiert. Gemäß der FR-A-2 558 845 werden Divinylether als Vernetzungsmittel bei Temperaturen zwischen 150 und 200 °C mit Carboxylgruppen enthaltenden Polyolefinen vermischt und geeignete Substrate bei Temperaturen zwischen 200 und 250 °C mit der erhaltenen Mischung beschichtet.

Aufgabe der vorliegenden Erfindung waren lagerstabile, wäßrigen Dispersionen von vernetzbaren Copolymerisaten, welche ein Vernetzungsmittel enthalten und bei Raumtemperatur vernetzbar sind.

Aufgabe der vorliegenden Erfindung waren weiterhin wäßrige Klebstoffe, insbesondere Haftklebstoffe, welche eine gute Kohäsion und Adhäsion aufweisen.

Demgemäß wurde die oben definierte Dispersion oder Lösung sowie ihre Verwendung als Klebstoff gefunden.

Die Vernetzungsreaktion von Carbonsäure- oder Sulfonsäuregruppen enthaltenden Polymeren mit Vinylethern verläuft vermutlich nach folgendem Reaktionsschema:

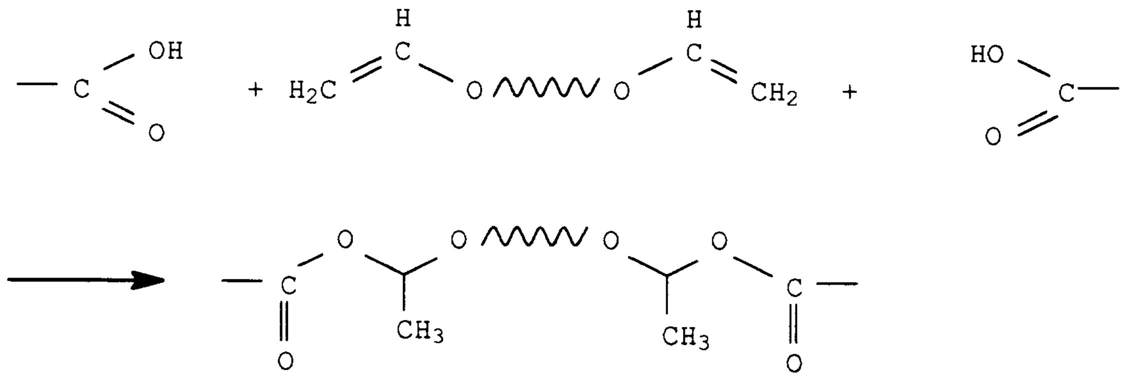

Die Carbonsäure- bzw. Sulfonsäuregruppe addiert sich dabei an die Doppelbindung des Vinylethers.

Die erfindungsgemäßen wäßrigen Dispersionen oder Lösungenenthalten ein radikalisches Polymerisat, welches zu 0,01 bis 10 Gew.-%, bevorzugt 0,05 bis 3 Gew.-% und besonders bevorzugt 0,1 bis 2 Gew.-% aus Carbonsäure- oder Sulfonsäuregruppen besteht.

Die Carbonsäure- oder Sulfonsäuregruppen können z.B. durch polymeranaloge Umsetzungen oder radikalische Copolymerisation von geeigneten Carbonsäure- oder Sulfonsäuregruppen enthaltenden Verbindungen (im weiteren als Verbindungen a) bezeichnet) in das radikalische Polymerisat eingebaut sein.

Geeignet sind z.B. Verbindungen a), welche neben mindestens einer Sulfonsäure- oder Carbonsäuregruppe mindestens eine weitere funktionelle Gruppe z.B. weitere Carbonsäuregruppen, Carbonsäureanhydridgruppen, primäre oder sekundäre Aminogruppen, Hydroxylgruppen oder Epoxygruppen als zusätzliche funktionelle Gruppe enthalten (im weiteren als funktionelle Verbindung $a_1$) bezeichnet).

Die funktionelle Verbindung kann mit entsprechend funktionalisierten Polymeren umgesetzt werden, z.B. reagiert eine Verbindung mit einer Carbonsäure- oder Carbonsäureanhydridgruppe als zusätzlicher funktioneller Gruppe leicht mit primären oder sekundären Aminogruppen in der Polymerkette. Ebenso reagiert eine Verbindung mit einer Epoxygruppe als zusätzlicher funktioneller Gruppe leicht mit Hydroxylgruppen oder primären oder sekundären Aminogruppen in der Polymerhauptkette.

Zum Einbau von Carbonsäure- oder Sulfonsäuregruppen in das radikalische Polymerisat eignet sich bevorzugt die Copolymerisation von copolymerisierbaren ethylenisch ungesättigten Monomeren, welche mindestens eine Carbonsäure- oder Sulfonsäuregruppe enthalten (im folgenden als Monomere $a_2$) bezeichnet).

Als Monomere $a_2$) zu nennen sind beispielsweise Acrylsäure, Methacrylsäure, Maleinsäure, Fumarsäure oder Vinylsulfonsäure.

Das radikalische Polymerisat kann neben den Verbindungen a) sogenannte radikalisch polymerisierbare Hauptmonomere b) und gegebenenfalls noch weitere radikalisch polymerisierbare Nebenmonomere c) enthalten, welche keine Carbonsäure- oder Sulfonsäuregruppen aufweisen..

Als Monomere b) kommen Ester der Acryl- oder Methacrylsäure von 1 bis 20 C-Atome enthaltenden Alkylalkoholen in Betracht. Als solche Alkohole seien genannt Methanol, Ethanol, n- oder i-Propanol, n-, s- und t-Butanol, n-Pentanol, Isoamylalkohol, n-Hexanol, Octanol, 2-Ethylhexanol, Lauryl- und Stearylalkohol.

Gute Ergebnisse werden mit (Meth)-acrylsäurealkylestern mit einem $C_1$-$C_{10}$-Alkylrest, wie Methylmethacrylat, Methylacrylat, n-Butylacrylat, Ethylacrylat und 2-Ethylhexylacrylat erzielt.

Insbesondere sind auch Mischungen der (Meth)acrylsäurealkylester geeignet.

Weiterhin kommen Vinylester von Carbonsäuren mit 1 bis 20 C-Atomen wie Vinyllaurat, -stearat, Vinylpropionat und Vinylacetat in Betracht.

Als vinylaromatische Verbindungen mit bis zu 20 C-Atomen kommen Vinyltoluol, $\alpha$- und p-Styrol, $\alpha$-Butylstyrol, 4-n-Butylstyrol, 4-n-Decylstyrol und vorzugsweise Styrol in Betracht. Beispiele für ethylenisch ungesättigte Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und mindestens zwei konjugierten olefinischen Doppelbindungen seien Butadien, Isopren und Chloropren genannt.

Die Monomeren b) können insbesondere auch im Gemisch eingesetzt werden, vor allem, um gewünschte Glasübergangstemperaturen des Copolymerisats einzustellen.

Als weitere, d.h. von b) verschiedene, copolymerisierbare Monomere c) seien z.B. Ester der Acryl- und Methacrylsäure von Alkoholen mit 1 bis 20 C-Atomen, die außer dem Sauerstoffatom in der Alkoholgruppe

mindestens ein weiteres Heteroatom enthalten und/oder die einen aliphatischen oder aromatischen Ring enthalten, genannt.

In Betracht kommen z.B. 2-Ethoxyethylacrylat, 2-Butoxyethyl(meth)- acrylat, Dimethylaminoethyl(meth)-acrylat, Diethylaminoethyl(meth)acrylat, (Meth)acrylsäurearyl-, -alkaryl- oder cycloalkylester, wie Cyclohexyl-(meth)-acrylat, Phenylethyl(meth)-acrylat, Phenylpropyl(meth)-acrylat-oder Acrylsäureester von heterocyclischen Alkoholen wie Furfuryl-(meth)acrylat.

Darüber hinaus seien noch (Meth)acrylamid sowie dessen am Stickstoff mit $C_1$-$C_4$-Alkyl substituierten Derivate als mögliche Monomere c) genannt.

Von besonderer Bedeutung sind auch hydroxyfunktionelle Monomere c), z.B. (Meth)acrylsäure-$C_1$-$C_{15}$-alkylester, welche durch ein oder zwei Hydroxygruppen substituiert sind. Insbesondere von Bedeutung als hydroxyfunktionelle Comonomere sind (Meth)acrylsäure-$C_1$-$C_8$-Hydroxyalkylester, wie n-Hydroxyethyl-, n-Hydroxypropyl- oder n-Hydroxybutyl(meth)acrylat.

Des weiteren genannt seien auch Maleinsäureanhydrid oder Glycidyl(meth)acrylat.

Der Gewichtsanteil der Monomeren b) in Polymerisat kann 30 bis 99,99, bevorzugt 60 bis 99,9 und besonders bevorzugt 80 bis 99,5 Gew.-%; derjenige der Monomeren c) kann 0 bis 60, bevorzugt 0 bis 30, besonders bevorzugt 0 bis 10 Gew.-% betragen.

Der Gewichtsanteil der Verbindungen a) wird dann so gewählt, daß sich die Gewichtsanteile der Monomeren und gegebenenfalls der funktionellen Verbindungen zu 100 % addieren und das Polymerisat den oben beschriebenen Gehalt an Carbonsäure- oder Sulfonsäuregruppen aufweist.

Die Glasübergangstemperatur des Polymerisats liegt im allgemeinen zwischen -50 und +140 °C, vorzugsweise zwischen -30 und +100 °C.

Die Glasübergangstemperatur des Polymerisats läßt sich nach üblichen Methoden wie Differentialthermoanalyse oder Differential Scanning Calorimetrie (s. ASTM 3418/82, sog. "midpoint temperature") bestimmen.

Bei der Verwendung als Klebstoff, insbesondere als Haftklebstoff liegt die Glasübergangstemperatur bevorzugt zwischen -30 und +10 °C. Als Monomere b) eignen sich in diesem Fall insbesondere $C_1$-$C_{20}$-, vorzugsweise $C_1$-$C_8$-Alkyl(meth)acrylate, gegebenenfalls im Gemisch mit Vinylaromaten, vorzugsweise Styrol.

Das Polymerisat kann durch übliche Polymerisationsmethoden, wie Masse-, Emulsions-, Suspensions- oder Lösungspolymerisation hergestellt werden.

Vorzugsweise wird das Polymerisat durch Emulsionspolymerisation hergestellt, wobei das Polymerisat als wäßrige Dispersion erhalten wird.

Die Monomeren können bei der Emulsionspolymerisation wie üblich in Gegenwart eines wasserlöslichen Initiators und eines Emulgators bei vorzugsweise 30 bis 95 °C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate.

Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Zur Einstellung des Molekulargewichts können bei der Polymerisation Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan.

Die erfindungsgemäße wäßrige Dispersion oder Lösung enthält als Vernetzungsmittel eine Verbindung mit mindestens zwei Vinylethergruppen

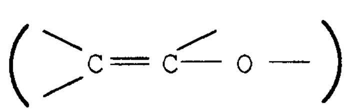 ,

vorzugsweise mit zwei oder drei, ganz besonders bevorzugt mit zwei Vinylethergruppen.

Vorzugsweise handelt es sich dabei um Vinylether der Formel

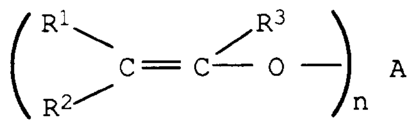

I,

worin A für eine n-valente lineare oder verzweigte Kohlenwasserstoffkette aus 2 bis 40 Kohlenstoffatomen, welche gegebenenfalls durch 1 bis 19 nicht benachbarte Sauerstoff-, Stickstoff- oder Schwefelatome unterbrochen oder durch ein oder zwei $C_5$-$C_{10}$-cycloaliphatische oder $C_5$-$C_{12}$-aromatische Ringsysteme substituiert oder unterbrochen sein kann, oder für ein n-valentes $C_5$-$C_{10}$-cycloaliphatisches oder $C_5$-$C_{12}$-aromatisches Ringsystem steht und n eine ganze Zahl von 2 bis 6 sein kann und $R^1$, $R^2$ und $R^3$ unabhängig voneinander für ein Wasserstoffatom oder eine $C_1$-$C_4$-Alkylgruppe stehen.

Besonders bevorzugt steht A für eine lineare oder verzweigte Kohlenwasserstoffkette aus 2 bis 25 Kohlenstoffatomen, welche gegebenenfalls durch 1 bis 12 nicht benachbarte Sauerstoffatome unterbrochen ist oder durch einen Cyclohexyl- bzw. Cyclohexylenring substituiert bzw. unterbrochen ist.

n ist vorzugsweise gleich 2, 3 oder 4.

Besonders bevorzugt ist n = 2.

$R^1$, $R^2$ und $R^3$ stehen vorzugsweise für ein Wasserstoffatom.

Als Vinylether genannt seien beispielsweise Butandioldivinylether, Hexandioldivinylether, Pentaerythrittetravinylether, Trimethylolpropantrivinylether, Ethylenglykoldivinylether, Tetramethylenglykoldivinylether oder 1,4-Cyclohexandimethanoldivinylether.

Insbesondere geeignet sind auch Divinylether von Polyalkylenoxiden, z.B. Polyethylenoxiden oder Polytetrahydrofuranen.

Ebenso geeignet sind auch Polyacetale mit endständigen Vinylethergruppen, wie sie leicht z.B. durch Addition von Diolen an Divinylethern entstehen.

Es können auch von Formel I verschiedene Vinylether eingesetzt werden. In Betracht kommen z.B. Vinylether von Polyalkylenoxiden oder Polyacetalen mit mehr als 40 C-Atomen in der Kohlenwasserstoffkette und einem mittleren Molekulargewicht $M_n$ von bis zu 10 000 bevorzugt bis zu 2 000 (bestimmt durch Gelpermeationschromatographie, Tetrahydrofuran als Elutionsmittel und Polystyrolstandard). Des weiteren seien auch Vinylether von Polyesterdiolen oder Hydroxylgruppen enthaltenden radikalischen Polymerisaten genannt.

Die Vinylether sind als solche bekannt. Sie können leicht hergestellt werden durch Vinylierung der entsprechenden Di- oder Polyalkohole mit Acetylen.

Im allgemeinen liegt der Gehalt an Vinyletherverbindungen in den erfindungsgemäßen Dispersionen oder Lösungen bei 0,1 bis 10 Gew.-%, vorzugsweise 0,1 bis 5 Gew.-%, bezogen auf das radikalische Polymerisat.

Es kann auch ein deutlicher Überschuß oder Unterschuß der Vinylethergruppen, bezogen auf die Carbonsäure- oder Sulfonsäuregruppen, eingesetzt werden.

Die erfindungsgemäßen Dispersionen oder Lösungen enthalten die Vinyletherverbindungen vorzugsweise in solchen Mengen, daß die Vinylethergruppen zu den Carbonsäure- oder Sulfonsäuregruppen ungefähr äquimolar sind.

Der Feststoffgehalt der erfindungsgemäßen Dispersion oder Lösung liegt bevorzugt zwischen 20 und 90 Gew.-%, insbesondere zwischen 30 und 70 Gew.-%.

Die erfindungsgemäße Dispersion oder Lösung, insbesondere die Dispersion, eignet sich als Beschichtungsmittel für unterschiedliche Substrate mit Kunststoff-, Holz- oder Metalloberflächen oder z.B. für Textilien, Fliesstoffe, Leder oder Papier. Sie eignet sich ebenfalls für Anwendungen in der Bauchemie, z.B. als Klebstoffe, Dichtungsmassen, Bindemittel oder ähnliches. Bei den Beschichtungen kann es sich z.B. um Anstriche, Schutzüberzüge oder Klebstoffbeschichtungen handeln.

Die erfindungsgemäße Dispersion oder Lösung kann je nach Verwendungszweck übliche Hilfs- und Zusatzmittel enthalten. Hierzu gehören beispielsweise Füllstoffe wie Quarzmehl, Quarzsand, hochdisperse Kieselsäure, Schwerspat, Calciumcarbonat, Kreide, Dolomit oder Talkum, die oft zusammen mit geeigneten Netzmitteln wie z.B. Polyphosphaten wie Natriumhexamethaphosphat, Naphthalinsulfonsäure, Ammonium- oder Natriumpolyacrylsäuresalze eingesetzt werden, wobei die Netzmittel im allgemeinen von 0,2 bis 0,6 Gew.-%, bezogen auf den Füllstoff, zugesetzt werden.

Fungizide zur Konservierung werden, falls gewünscht im allgemeinen in Mengen von 0,02 bis 1 Gew.-%, bezogen auf die gesamte Dispersionen oder Lösung eingesetzt. Geeignete Fungizide sind beispielsweise Phenol- oder Kresol-Derivate oder zinnorganische Verbindungen.

Besonders eignet sich die erfindungsgemäße Dispersion als Dichtstoff oder Klebstoff, insbesondere z.B. als Haftklebstoffe. Als Klebstoff können die Dispersionen neben obengenannten Zusatzstoffen noch spezielle, in der Klebstofftechnologie übliche Hilfs- und Zusatzmittel enthalten. Hierzu gehören beispielsweise Verdickungsmittel, Weichmacher oder auch klebrigmachende Harze wie z.B. Naturharze oder modifizierte Harze wie Kolophoniumester oder synthetische Harze wie Phthalatharze.

Die erfindungsgemäße Dispersion oder Lösung ist lagerstabil. Die Vernetzungsreaktion tritt schon bei Raumtemperatur bei Entfernen der flüssigen Phase, d.h. der Verflüchtigung des Wassers ein.

Durch Temperaturerhöhung z.B. auf 30 bis 100 °C kann die Verflüchtigung des Wassers beschleunigt werden.

Bei der Verwendung als Klebstoff, z.B. Haftklebstoff ergeben sich Verklebungen mit hoher innerer Festigkeit (Kohäsion) und gleichzeitig guter Haftung (Adhäsion) zu den zu verklebenden Substraten.

Bei der Verwendung als Beschichtungsmittel für Leder ist besonders die Naßreibechtheit und gute Knickelastizität des beschichteten Leders hervorzuheben.

Beispiele

I Herstellung von Polymerdispersionen D1 bis D6

In einem Reaktionsgefäß mit Rührer und zwei Zulaufgefäßen wurden 150 g Wasser vorgelegt. Die Zulaufgefäße enthielten folgende Gemische:

Zulauf 1:

550 g Monomerenmischung gemäß der Tabelle 1
8,56 g einer 45 %igen wäßrigen Lösung von C12-Alkyldiphenylethersulfonat (Dowfax® 2A1 der Firma Dow Chemicals)
11,0 g einer 15 %igen wäßrigen Lösung von Natriumlaurylsulfat
0,66 g tert.Dodecylmercaptan
190 g Wasser

Zulauf 2:

100 g Wasser
1,65 g Natriumperoxodisulfat
Die Vorlage wurde auf 85 °C erhitzt und 1 Gew.-% des Zulaufes 1 sowie 20 Gew.-% des Zulaufes 2 unter Rühren zugegeben. Nach 15 min anpolymerisieren wurden der Zulauf 1 in 150 min zugefahren, wobei in den ersten 15 min der Zugabe von Zulauf 1 nur 40 g kontinuierlich zugegeben wurden. Der Rest von Zulauf 1 wurde anschließend in 135 min kontinuierlich zugegeben. Der Zulauf 2 wurde kontinuierlich in 3 h zugegeben. Bei 85 °C wurde noch ca. 2 h nachpolymerisiert und dann abgekühlt. Anschließend wurde mit einer 25 %igen wäßrigen Ammoniaklösung ein pH-Wert von 7,0 eingestellt.

Entsprechend wurden die Polymerdispersionen D1 bis D6 hergestellt.

Tabelle 1

| Polymerdispersion | Copolymerisat-Zusammensetzung Monomere in Gew.-% |
|---|---|
| D1 | 100 BA |
| D2 | 99,0 BA; 1,0 AS |
| D3 | 97,0 BA; 3,0 AS |
| D4 | 97,0 BA; 3,0 MAS |
| D5 | 99,0 BA; 1,0 DAAM |
| D6 | 97,0 BA; 3,0 DAAM |
| Abkürzungen:<br>BA: Butylacrylat<br>AS: Acrylsäure<br>MAS: Methacrylsäure<br>DAAM: Diacetonacrylamid | |

II Zusatz von Vernetzern

Jeweils 200 g der Dispersionen wurden bei Raumtemperatur unter Rühren mit den in Tabelle 2 aufgeführten Mengen an Vernetzern versetzt und ca. 1 h bei R.T. gerührt.

III Anwendungstechnische Prüfung

Zur Prüfung der anwendungstechnischen Eigenschaften wurden die Dispersionen bzw. deren Abmischungen mit einem Auftragsgewicht von ca. 20 $g/m^2$ auf Polyesterfolie (Hostaphan RN36, Firma Hoechst) gerakelt und die beschichteten Folien 3 min bei 90 °C im Umluft-Trockenschrank getrocknet. Die beschichteten Folien wurden dann in 2 cm breite Prüfstreifen geschnitten.

Zur Bestimmung der Scherfestigkeit (Maß für Kohäsion) wurden die Klebestreifen in 2,5 cm Länge auf ein chromiertes V2A-Prüfblech geklebt, mit einer 2 kg schweren Rolle 1 mal angerollt, 24 h gelagert und anschließend im Hängen bei 23 °C mit einem 2 kg Gewicht belastet. Das Maß für die Scherfestigkeit war die Zeit bis zum Abfallen des Gewichtes; es wurde jeweils der Durchschnitt aus 3 Messungen berechnet.

Bei der Bestimmung der Schälfestigkeit (Maß für Adhäsion) wurde jeweils ein Klebestreifen auf ein chromiertes V2A-Prüfblech geklebt und mit einer 1 kg schweren Rolle 1 mal angerollt und 24 h gelagert. Er wurde dann mit einem Ende in die oberen Backen einer zug-Dehnungs-Prüfapparatur eingespannt. Der Klebestreifen wurde mit 300 mm/min unter einem 90° Winkel von der Prüffläche (V2A-Stahl) abgezogen und der dazu benötigte Kraftaufwand gemessen. Das Maß für den Schälwert war die Kraft in N, die sich als Durchschnitt aus 3 Messungen ergab.

Die Bestimmung des Schlingenwertes (Maß für Adhäsion) erfolgte nach der Prüfmethode Nr. 9 der Féderation Internationale des Fabricants Transformateurs d'Adhésifs et Thermocollants sur Papiers et Autres Supports (FINAT).

Zur Bestimmung des Schlingenwertes wurde aus einem 17,5 cm langen und 2 cm breiten Prüfstreifen durch Einspannen beider Enden in die Klemmbacken einer Zugmaschine eine Schlaufe gebildet, die dann mit einer chromierten Stahloberfläche mit einer Geschwindigkeit von 30 cm/min (Herabsenken der Schlaufe auf das chromierte Stahlblech) in Kontakt gebracht wird. Nach vollflächigem Kontakt wird die Schlaufe sofort wieder abgezogen und die dabei ermittelte Maximalkraft in N als Maß für den Schlingenwert bestimmt.

Zur Beurteilung der Vernetzungswirkung wurden die Prüfzahlen PZ1 und PZ2 herangezogen. PZ1 ist dabei das Produkt aus Schälfestigkeit und Scherfestigkeit, PZ2 ist das Produkt aus dem Schlingenwert, der Scherfestigkeit und der Schälfestigkeit.

Ergebnisse sind ebenfalls in Tabelle 2 aufgeführt.

Abkürzungen:

BDDVE = Butandioldivinylether
CHDMDVE = Cyclohexandimethanoldivinylether
PTHF-DVE = Polytetrahydrofuran-divinylether (Molekulargewicht Mn ca. 400)
ADDH = Adipinsäuredihydrazid

Tabelle 2

| Nr. | Ausgangs-dispersion | zugesetzter Vernetzer und Menge (bezogen auf 200 g Dispersion) | Schälwert [N] | Schlingen-wert [N] | Scher-festigkeit [h] | Prüfzahl PZ1 [N*h] | Prüfzahl PZ2 [N2*h] |
|---|---|---|---|---|---|---|---|
| 1 | D1 | --- | 7,7 | 16,3 | 0,1 | 1 | 15 |
| 2 | D1 | 0,55 g BDDVE | 7,6 | 14,1 | 0,1 | 1 | 12 |
| 3 | D1 | 0,55 g CHDMDVE | 7,4 | 14,5 | 0,1 | 1 | 13 |
| 4 | D2 | --- | 9,5 | 13,1 | 0,3 | 2 | 31 |
| 5 | D2 | 0,55 g BDDVE | 11,4 | 6,3 | 48,0 | 547 | 3447 |
| 6 | D2 | 0,55 g CHDMDVE | 11,5 | 6,3 | 48,0 | 552 | 3478 |
| 7 | D3 | --- | 15,1 | 6,0 | 1,4 | 21 | 124 |
| 8 | D3 | 0,55 g CHDMDVE | 6,5 | 4,3 | 48,0 | 312 | 1342 |
| 9 | D3 | 1,65 g CHDMDVE | 2,9 | 2,9 | 48,0 | 139 | 404 |
| 10 | D4 | --- | 20,5 | 5,7 | 0,7 | 14 | 82 |
| 11 | D4 | 0,55 g PTHF-DVE | 8,3 | 5,3 | 48,0 | 398 | 2112 |
| 12 | D4 | 1,10 g PTHF-DVE | 6,2 | 2,7 | 48,0 | 298 | 804 |
| 13 | D4 | 2,20 g PTHF-DVE | 4,3 | 2,5 | 48,0 | 206 | 516 |
| 14 | D5 | --- | 8,2 | 9,5 | 0,2 | 1 | 12 |
| 15 | D5 | 0,55 g ADDH | 3,9 | 3,4 | 48,0 | 187 | 636 |
| 16 | D6 | --- | 10,7 | 8,9 | 0,2 | 3 | 23 |
| 17 | D6 | 1,10 g PTHF-DVE | 10,1 | 6,9 | 0,2 | 2 | 12 |
| 18 | D6 | 2,20 g PTH-DVE | 9,7 | 9,0 | 0,1 | 1 | 12 |

## Patentansprüche

1. Wäßrige Dispersion oder Lösung eines radikalischen Polymerisats, welches zu 0,01 bis 10 Gew.-% aus Carbonsäuregruppen -$CO_2H$ oder Sulfonsäuregruppen -$SO_3H$ besteht, enthaltend als Vernetzungsmittel eine Verbindung mit mindestens zwei Vinylethergruppen.

2. Wäßrige Dispersion nach Anspruch 1, enthaltend als Vernetzungsmittel mindestens einen Vinylether der Formel

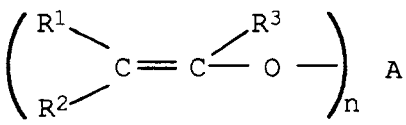 I,

worin A für eine n-valente lineare oder verzweigte aliphatische Kohlenwasserstoffkette aus 2 bis 40 Kohlenstoffatomen, welche gegebenenfalls durch 1 bis 19 nicht benachbarte Sauerstoff-, Stickstoff- oder Schwefelatome unterbrochen oder durch ein oder zwei $C_5$-$C_{10}$-cycloaliphatische oder $C_5$-$C_{12}$-aromatische Ringsysteme substituiert oder unterbrochen sein kann, oder für ein n-valentes $C_5$-$C_{10}$-cycloaliphatisches oder $C_5$-$C_{12}$-aromatisches Ringsystem steht, n eine ganze Zahl von 2 bis 6 sein kann und $R^1$, $R^2$ und $R^3$ unabhängig voneinander für ein Wasserstoffatom oder eine $C_1$- bis $C_4$-Alkylgruppe stehen.

3. Dispersion nach Anspruch 1 oder 2, enthaltend ein Copolymerisat mit einer Glasübergangstemperatur zwischen -50 und +140 °C, wobei das Copolymerisat
   a) mindestens eine Verbindung mit mindestens einer Carbonsäure- oder Sulfonsäuregruppe
   b) 30 bis 99,99 Gew.-% mindestens eines $C_1$- bis $C_{20}$-Alkyl(meth)acrylats, eines Vinylesters von 1 bis 20 C-Atome enthaltenden Carbonsäuren, eines Vinylaromaten mit bis zu 20 C-Atomen, eines ethylenisch ungesättigten Nitrils mit 3 bis 6 C-Atomen, eines Vinylhalogenids oder eines nichtaromatischen Kohlenwasserstoffs mit 4 bis 8 C-Atomen und mindestens 2 konjugierten Doppelbindungen, und
   c) 0 bis 60 Gew.-% mindestens eines weiteren ethylenisch ungesättigten Monomeren enthält,
   wobei der Gehalt der Verbindung a) so gewählt wird, daß das Copolymerisat zu 0,01 bis 10 Gew.-% aus Carbonsäure- oder Sulfonsäuregruppen besteht und sich die Gewichtsprozente von a), b) und c) zu 100 Gew.-% addieren.

4. Verwendung einer wäßrigen Dispersion gemäß einem der Ansprüche 1 bis 3 als Klebstoff.

5. Verwendung einer wäßrigen Dispersion gemäß einem der Ansprüche 1 bis 3 als Beschichtungsmittel für Leder.

6. Beschichtete Substrate, erhältlich unter Verwendung einer Dispersion gemäß einem der Ansprüche 1 bis 3.

Europäisches Patentamt

# EUROPÄISCHER RECHERCHENBERICHT

Nummer der Anmeldung
EP 93 11 6694

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| D,A | FR-A-2 558 845 (SOCIETE ATOCHEM)<br>* Ansprüche *<br>----- | 1 | C08K5/06<br>C08L57/10<br>C08L41/00<br>C09J133/06<br>C09J4/00 |
| | | | RECHERCHIERTE SACHGEBIETE (Int.Cl.5) |
| | | | C08K<br>C08L<br>C09J |

Der vorliegende Recherchenbericht wurde für alle Patentansprüche erstellt

| Recherchenort | Abschlußdatum der Recherche | Prüfer |
|---|---|---|
| DEN HAAG | 14. Februar 1994 | DE LOS ARCOS, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)